(19) Europäisches Patentamt / European Patent Office / Office européen des brevets

(11) **EP 1 898 193 B1**

(12) **EUROPÄISCHE PATENTSCHRIFT**

(45) Veröffentlichungstag und Bekanntmachung des Hinweises auf die Patenterteilung:
**01.06.2016 Patentblatt 2016/22**

(51) Int Cl.:
***G01G 23/10*** *(2006.01)*     ***G01G 23/01*** *(2006.01)*
***G01G 7/04*** *(2006.01)*

(21) Anmeldenummer: **06120100.0**

(22) Anmeldetag: **05.09.2006**

(54) **Kraftmessvorrichtung und Referenzeinheit**

Force measuring device and reference unit

Dispositif de mesure de forces et unité de référence.

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**12.03.2008 Patentblatt 2008/11**

(73) Patentinhaber: **Mettler-Toledo GmbH**
**8606 Greifensee (CH)**

(72) Erfinder:
• **Reber, Daniel**
**8322, Madetswil (CH)**

• **Burkhard, Hans-Rudolf**
**8492, Wila (CH)**

(56) Entgegenhaltungen:
**DE-A1- 3 324 402**    **GB-A- 2 104 667**
**GB-A- 2 257 793**    **US-A- 4 212 361**
**US-B1- 6 271 484**

• **KESSLING G ET AL.: "A weighing device for use on a ship" Measurement science and technology,IOP, Bd. 4, Nr. 10, 1993, Seiten 1035-1042, XP000399915 Bristol, GB**

## Beschreibung

Die Erfindung betrifft eine Kraftmessvorrichtung, insbesondere eine Waage, mit einer Referenzeinheit.

Die Messgenauigkeit einer Kraftmessvorrichtung, beispielsweise einer Waage mit elektromagnetischer Kraftkompensation oder DMS-Technologie (siehe [1], Bauen Sie Ihre Qualität auf solidem Grund!, Firmenbrochure, Mettler Toldeo GmbH, Januar 2001, Seiten 14 - 15) wird durch zahlreiche Einflussfaktoren bestimmt, die in [2], Wägefibel, Mettler Toldeo GmbH, April 2001 beschrieben sind.

Bei Waagen aller Art sind mechanische Einwirkungen, wie Vibrationen oder Stösse besonders störend, weshalb Filter vorgesehen werden, die der Beseitigung von störenden Signalanteilen dienen. Beispielsweise in [3], US 2004/0088342 A1 und [4], US 6,271,484 B1 sind Verfahren beschrieben, bei denen vom Messumformer einer Kraftmessvorrichtung abgegebene Signale mittels digitaler Filter bearbeitet werden.

Bei Kraftmessvorrichtungen mit sehr hohen Auflösungen, bei denen eine Messgrösse erfasst und mittels eines Analog/Digital (AD)-Wandlers in ein digitales Signal gewandelt wird, ist ferner eine sehr präzise Referenz, eine Referenzspannung oder ein Referenzstrom, erforderlich. In [5], U. Tietze, Ch. Schenk, Halbleiterschaltungstechnik, 11. Auflage, 1. Nachdruck, Springer Verlag, Berlin 1999, Seiten 1043-1062 sind verschiedene AD-Wandler gezeigt, die alle mit einer Referenzspannung $U_{REF}$ versorgt werden. Beispielsweise anhand des in [5], Seite 1047-1048 beschriebenen Parallelverfahrens ist leicht ersichtlich, dass die erreichbare Auflösung bei der AD-Wandlung eines analogen Signals von der Stabilität der Referenzspannung $U_{REF}$ abhängig ist.

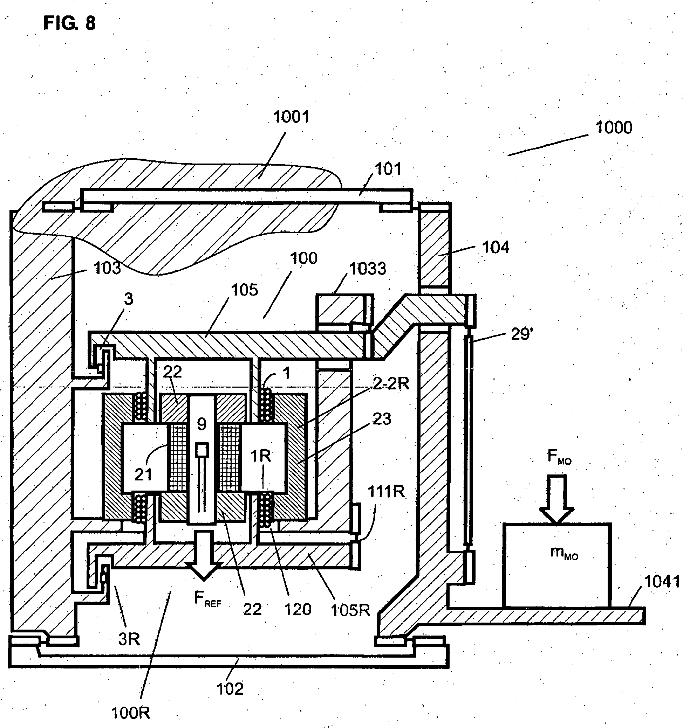

In [6], Albert O'Grady, Transducer/Sensor Excitation and Measurement Techniques, Analog Dialogue 34-5 (2000) sind Messbrücken beschrieben, wie sie in Waagen mit DMS-Technologie verwendet werden. In [6], Seite 4, Figur 8 ist gezeigt, dass die Signale an den Mittelabgriffen der Messbrücke mittels eines Sigma-Delta A/D Wandlers in ein digitales Signal gewandelt werden können, wobei die an der Messbrücke anliegenden Spannungen dem Sigma-Delta A/D Wandler als Referenzspannungen, zugeführt werden (hinsichtlich der Arbeitsweise von Messbrücken siehe auch [5], Seiten 1241 und 1243).

Während bei Waagen mit DMS-Technologie Auflösungen erzielt werden, für die konventionell erzeugte Referenzspannungen normalerweise genügen, werden bei Kraftmessvorrichtungen mit elektromagnetischer Kraftkompensation, die deutlich höhere Auflösungen aufweisen können, Referenzspannungen benötigt, welche eine höhere Stabilität und geringeres Rauschen aufweisen. Besonders aufwendig ist beispielsweise die Unterdrückung von so genanntem Popcorn-Rauschen, das typischerweise durch Halbleiter verursacht wird, welche in den Übergängszonen metallische Verunreinigungen aufweisen.

Eine elektronische Waage mit elektromagnetischer Kraftkompensation ist beispielsweise in [7], DE 33 24 402 beschrieben. Die elektrische Einrichtung dieser Waage weist eine Referenzspannungsquelle mit einer Zerier-Diode auf, die für-die Bestimmung des Kompensationsstromes massgebend ist. Die Eigenschaften der Zener-Diode sind temperaturabhängig, weshalb ein Korrekturnetzwerk thermische Einflüsse kompensiert. Bei hochauflösenden Waagen mit elektromagnetischer Kraftkompensation ist daher nicht nur das Rauschverhalten, sondern auch das Temperaturverhalten der verwendeten Referenz bzw. Referenzeinheit von besonderer Bedeutung.

Weiterer stand der Technik ist durch die Dokumente US 4 212 361 A und XP000399915: KESSLING G ET AL.: "A weighing device for use on a ship", Measurement science and technology, IOP, Bd. 4, Nr. 10, 1993, Seiten 1035-1042 bekannt, welche jeweils eine elektronische Waage mit elektromagnetischer Kraftkompensation offenbaren. In beiden Dokumenten wird zudem eine ebenfalls nach dem Prinzip der elektromagnetischen Kraftkompensation arbeitende Referenzeinheit offenbart.

Der vorliegenden Erfindung liegt daher die Aufgabe zugrunde, eine verbesserte Kraftmessvorrichtung sowie eine Referenzeinheit anzugeben, mittels derer die oben genannten Probleme vermieden werden. Insbesondere ist eine Kraftmessvorrichtung zu schaffen, welche eine relativ kostengünstige Referenzeinheit aufweist, die der Abgabe einer geeigneten präzisen Referenzgrösse, eines Referenzstromes oder einer Referenzspannung, dient.

Diese Aufgabe wird mit einer Kraftmessvörrichtung mit einer Referenzeinheit gelöst, welche die in Anspruch 1 angegebenen Merkmale aufweist Vorteilhafte Ausgestaltungen der Erfindung sind in weiteren abhängigen Ansprüchen-angegeben.

Die Kraftmessvorrichtung weist eine Messeinheit und eine Referenzeinheit auf, die der Abgabe einer Referenzgrösse, eines Referenzstromes oder einer Referenzspannung, dient, mittels der die zu bestimmende Kraft eines Messobjekts von der Messeinheit erfassbar und/oder ein entsprechendes analoges Signal digitalisierbar ist.

Erfindungsgemäss ist die Referenzeinheit eine mit einer Referenzmasse belastete Kraftmessvorrichtung, die nach dem Prinzip der elektromagnetischen Kraftkompensation einen Referenzstrom erzeugt, der mittels einer Mess- und Regelvorrichtung derart regelbar ist, dass er in einer von einem Referenzhebel gehaltenen ersten Referenzspule ein Magnetfeld erzeugt, welches mit dem Magnetfeld eines Referenzmagneten, vorzugsweise eines Permanentmagneten derart zusammenwirkt, dass eine Kraft auf den Referenzhebel einwirkt, mittels der die ebenfalls auf den Referenzhebel einwirkende, gegebenenfalls mittels eines Hebelwerks übersetzte Kraft, der Referenzmasse kompensierbar ist.

Die mittels der Referenzeinheit erzeugte Referenzgrösse weist nur geringe systemimmanente Störanteile auf und ist daher für die Anwendung in Messgeräten, insbesondere Kraftmessvorrichtungen mit sehr hoher Auflösung besonders gut geeignet. Nebst der Vermeidung von systemimmanenten Störungen die bei Referenzquellen auf Basis der Halbleitertechnik auftreten, werden bei Kraftmessvorrichtungen erfindungsgemäss auch von aussen einwirkende Störungen, die praktisch phasengleich auf das Messobjekt und die Referenzmasse einwirken automatisch korrigiert, da sich nicht nur das Messsignal der Kraftmessvorrichtung, sondern auch die Referenzgrösse entsprechend den auf die Kraftmessvorrichtung einwirkenden Störungen verändert. Die durch Störungen verursachten Änderungen in der Referenzgrösse und im Messsignal verlaufen nämlich proportional.

Die erfindungsgemässe gravimetrische Referenzeinheit kann im Vergleich zu einer elektronischen Referenzeinheit, sofern diese vergleichbare Spezifikationen aufweisen soll, zudem kostengünstig hergestellt werden.

Aus der von der Referenzeinheit abgegebenen Referenzspannung oder dem Referenzstrom wird ein Kompensationsstrom abgeleitet und durch nur eine Referenzspule geführt, mittels dessen die Kraft der zu messenden Last kompensiert wird.

Alternativ ist die erfindungsgemäss erzeugte Referenzspannung oder der Referenzstrom ferner als Referenz für einen in der Messeinheit vorgesehenen AD-Wandler dienen, wie dies beispielsweise in [5], Seiten 1043-1062 beschrieben ist (siehe auch [6], Seite 4, Figur 8).

Der mittels der Referenzeinheit erzeugte Referenzstrom kann bedarfsweise in eine Referenzspannung oder in eine digitale Grösse gewandelt werden.

Die Referenzmasse wird vorzugsweise fest mit dem Referenzhebel verbunden, so dass störende Momente vermieden werden, die beim Verschieben der Referenzmasse ansonsten auftreten könnten. Aufgrund des Fehlens solch störender Momente, ist ein Hebelwerk, beispielsweise in Form eines Parallelogramms, nicht zwingend notwendig. Die Referenzmesseinheit kann daher nur mit einem Hebel, nämlich dem Referenzhebel versehen werden, der die Referenzmasse und die Referenzspule trägt. Die Referenzmasse wird dabei vorzugsweise durch die fest installierte Referenzspule und die Masse des Referenzhebels gebildet. Durch die Masse der Referenzspule wird der Referenzhebel nach unten gedrückt und durch das in der Referenzspule mittels des Kompensationsstroms gebildete Magnetfeldes, welches mit dem Referenzmagneten zusammenwirkt, gleichzeitig nach oben gedrückt und somit in der Balance gehalten.

Prinzipiell kann der Referenzhebel der Referenzeinheit daher an einem Ende drehbar gelagert und mit dem anderen Ende, an dem die Referenzspule vorgesehen ist, über dem Referenzmagneten gehalten werden. Nachteilig bei dieser Ausgestaltung ist jedoch, dass Änderungen des Luftdrucks das Referenzsignal beeinflussen. In einer weiteren vorzugsweisen Ausgestaltung der Erfindung wird daher ein Referenzhebel verwendet, dessen Volumenanteile, einschliesslich der Volumenanteile der vom Referenzhebel gehaltenen Referenzspule(n), beidseits des Dreh- und Lagerpunkts einander bezüglich des Auftriebs kompensieren. Zur Kompensation des Volumens der Referenzspule wird der Referenzhebel daher entsprechend ausgestaltet oder mit einem Kompensationskörper versehen, der in einem passenden Abstand auf der anderen Seite des Referenzhebels montiert wird. Die beidseits des Lagerpunkts auftretenden Auftriebskräfte sind daher auch bei Änderungen des Luftdrucks zumindest annähernd ausbalanciert.

Sofern aber die Kraftmessvorrichtung durch die Auslegung der Messeinheit-Mechanik bereits ein Ungleichgewicht bezüglich des Auftriebs aufweist, kann mittels einer teilweisen Kompensation des Volumens der Referenzspule dieses Ungleichgewicht des Auftriebs in der Messeinheit ausgeglichen werden. Damit baugleiche Referenzeinheiten in verschiedenen Kräftmessvorrichtungen verwendet werden können, ist vorzugsweise der Kömpensationskörper austauschbar, und/oder der Abstand vom Kompensationskörper zum Lagerpunkt des Referenzhebels einstellbar.

Um die Referenzeinheit möglichst vor Umgebungseinflüssen zu schützen, ist diese vorzugsweise in einem gasdicht verschlossenen Gehäuse angeordnet.

Die Problematik des Auftriebs kann bei einer gekapselten Referenzeinheit auf einfache Weise dadurch gelöst werden, dass das Gas innerhalb des gasdicht verschlossenen Gehäuses evakuiert wird.

In einer weiteren vorzugsweisen Ausgestaltung der Referenzeinheit werden Signalanteile der Regelgrösse, deren Frequenz oberhalb eines Wertes aus dem Bereich von vorzugsweise 10 Hz - 50 Hz liegt, über ein Hochpassfilter einer Regeleinheit zugeführt, mittels der ein Verstärker, beispielsweise ein Impedanzwandler steuerbar ist, der einen Kompensationsstrom an eine mit dem Referenzhebel verbundene zweite Referenzspule abgibt, welcher ein Magnetfeld erzeugt, das mit dem Magnetfeld des Referenzmagneten derart zusammenwirkt, dass höherfrequente Störeinwirkungen korrigierbar sind. Komplexe Störeinwirkungen sind mittels der zweiten Referenzspule daher rasch korrigierbar, ohne dass der als Referenz dienende Kompensationsstrom in der ersten Referenzspule beeinträchtigt wird. Der Referenzstrom bleibt daher weitgehend frei von hochfrequenten Störungen.

In einer weiteren vorzugsweisen Ausgestaltung der Referenzeinheit wird der Kompensationsstrom über die zweite Referenzspule einem Eingang eines Integrators zugeführt, dessen Ausgang auf den Eingang des Verstärkers zurückgeführt ist, wobei eine Regelschleife gebildet wird, die das Ausgangssignal des Integrators stets in die Ausgangslage zurückführt. Sofern in der zweiten Referenzspule nämlich ein Gleichstromanteil resultiert, wird dieser integriert und phasenrichtig an den Eingang des Verstärkers zurückgeführt, wodurch ein dort anliegender, konstanter Offset kompensiert wird. Durch diese Massnahme wird sichergestellt, dass in der zweiten Referenzspule nur störungsabhängige Ströme fliessen. Mittels des in der ersten Referenzspule fliessenden Stroms wird daher eine Kömpensätiönskraft erzeugt, welche die Kraft der Referenzmasse alleine und vollständig kompensiert.

Die von der Referenzeinheit erzeugte Referenzgrösse kann in einer Kraftmessvorrichtung verschiedenartig verwendet werden. Beispielsweise kann eine von der Referenzeinheit erzeugte Referenzspannung in einer nach dem DMS-Prinzip arbeitenden Messeinheit an eine Messbrücke angelegt werden.

Der von der Referenzeinheit erzeugte Referenzstrom kann in einer nach dem Prinzip der elektromagnetischen Kraftkompensation arbeitenden Messeinheit derart alternierend durch eine von einem zugehörigen Kompensationshebel gehaltene zugehörige erste und zweite Kompensationsspule geschaltet werden, dass ein Magnetfeld resultiert, welches mit dem Magnetfeld eines zugehörigen Permanentmagnetsystems derart zusammenwirkt, dass eine Kraft über den zugehörigen Kompensationshebel auf ein zugehöriges Hebelwerk einwirkt, mittels der die ebenfalls auf das Hebelwerk einwirkende Kraft des Messobjekts kompensiert wird.

Der Aufbau der Hebelsysteme der Messeinheit und der Referenzeinheit erfolgt vorzugsweise in integrierter Bauweise, bei der stationär gehaltene Teile der Messeinheit und der Referenzeinheit zusammengefasst und gemeinsam genutzt werden. Vorzugsweise werden die Messeinheit und die Referenzeinheit mittels einer monolithisch ausgebildeten Kraftübertragungsvorrichtung realisiert, in der die Hebelsysteme eingearbeitet sind. Um eine möglichst kompakte Ausgestaltung der Kraftmessvorrichtung zu erhalten, wird der wenigstens eine Referenzhebel der Referenzeinheit vorzugsweise in den feststehenden Teil des Parallelogramms der Messeinheit integriert. Durch diese Bauweise, mit Verwendung einer durch Funkenerosionstechnik bearbeiteten monolithisch ausgebildeten Kraftübertragungsvorrichtung, kann die Referenzeinheit mit nur geringem Mehraufwand gefertigt und mit minimalem Platzbedarf in die Kräftmessvorrichtung integriert werden.

In einer weiteren vorzugsweisen Ausgestaltung der Kraftmessvorrichtung wird für die Messeinheit und die Referenzeinheit ein gemeinsam genutztes Magnetsystem vorgesehen. Dadurch reduziert sich vorerst der Kostenaufwand, da auf einen separaten Referenzmagneten verzichtet werden kann. Ferner kann die Vorrichtung noch kompakter gebaut werden. Weiterhin resultieren Vorteile hinsichtlich der Temperaturstabilisierung, die nur für ein Magnetsystem realisiert werden muss. Zudem kompensieren sich die Auswirkungen von Änderungen des Magnetfeldes des Magnetsystems, die bei Temperaturschwankungen auftreten können.

Die Temperatur der Magnetsysteme und/oder der Spulen der Messeinheit und/oder der Referenzeinheit werden vorzugsweise erfasst und zur Korrektur der Messwerte verwendet. Allfällige Abweichungen der Referenzgrösse oder der Messergebnisse der Messeinheit, die durch Temperatureinflüsse verursacht werden, können dadurch kompensiert werden.

Die Referenzeinheit muss nicht zwingend mit der Messeinheit verbunden sein. Die Referenzeinheit kann auch als Modul ausgestaltet sein. Sofern es notwendig erscheint, kann die modulare Referenzeinheit mindestens einen Speicher zur Speicherung spezifischer Daten der Referenzeinheit aufweisen. Beispielsweise können Korrekturdaten aus der Endprüfung oder Identifikationscodes auf diesem Speicher abgelegt sein, welche dann durch die Prozessoreinheit der Kraftmessvorrichtung abgerufen werden können.

Des Weiteren kann die Referenzeinheit miniaturisiert, beispielsweise als Mikroelektromechanisches System (Micro- Electro- Mechanical- System) aufgebaut sein. Eine solcherart aufgebaute Referenzeinheit kann eine elektrische und mechanische Schnittstelle aufweisen, welche vorzugsweise dieselben Dimensionen und dieselbe Pinbelegung hat wie Halbleiterreferenzen, die als integrierte Schaltkreise von verschiedenen Herstellern angeboten werden. Vorzugsweise ist ein derart fragiles System wie bereits vorangehend beschrieben, ebenfalls gasdicht gekapselt und die dadurch geschaffenen Hohlräume sind vorzugsweise evakuiert.

Die vorangehend beschriebene Referenzeinheit kann nicht nur in Kraftmessvorrichtungen verwendet werden, somndern überall dort, wo entsprechende, präzise Referenzeinheiten benötigt werden. Insbesondere Messgeräte wie beispielsweise Erdbeschleunigungs-Messvorrichtungen, Beschleunigungssensoren und dergleichen, welche störenden Umgebungsschwingungen ausgesetzt sind, bietet die vorliegende Referenzeinheit aufgrund der Miterfassung dieser Schwingungen grosse Vorteile. Sofern der Referenzstrom mittels analoger oder digitaler Filter geglättet wird, kann die erfindungsgemässe Referenzeinheit auch in allen anderen Messgeräten verwendet werden.

Nachfolgend wird die Erfindung anhand von Zeichnungen näher erläutert. Dabei zeigt:

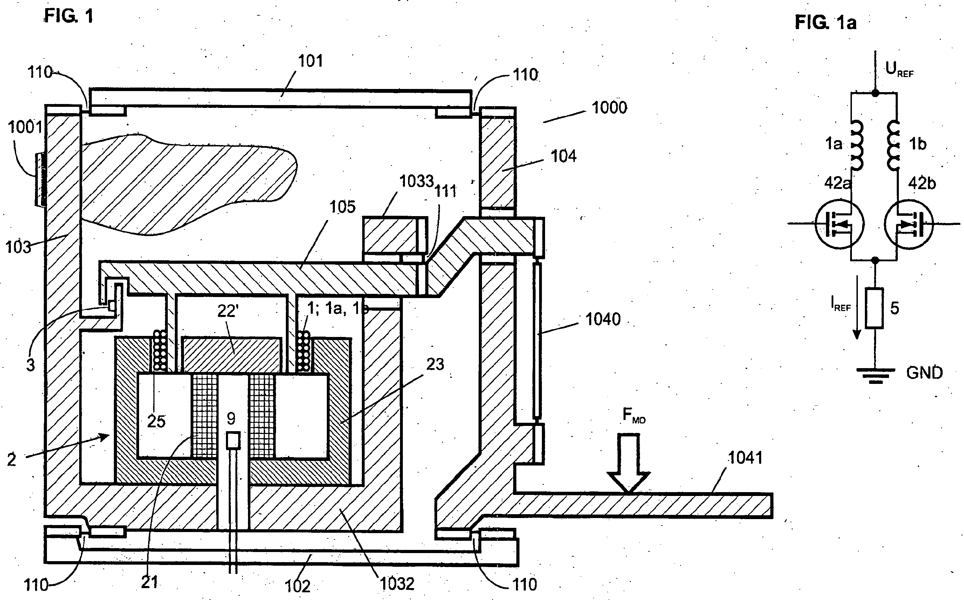

Figur 1     eine nach dem Prinzip der elektromagnetischen Kraftkompensätion arbeitende Kraftmessvorrichtung 1000, die mit einer Kompensationsspule 1 oder mit zwei Kompensationsspulen 1a, 1b ausgerüstet sein kann, mittels derer im Push-Pull-Betrieb zeitversetzt einander entgegen gerichtete Magnetfelder erzeugt werden;

Figur 1a    die beiden Kompensationsspulen 1a, 1b mit Schaltmitteln 42a, 42b, mittels derer zueinander komplementäre, in Abhängigkeit der zu kompensierenden Last $F_{MO}$ sigma-delta- oder pulsweitenmodulierte Anteile eines Referenzstroms $I_{REF}$ durch die Referenzspulen 1a, 1b geführt werden;

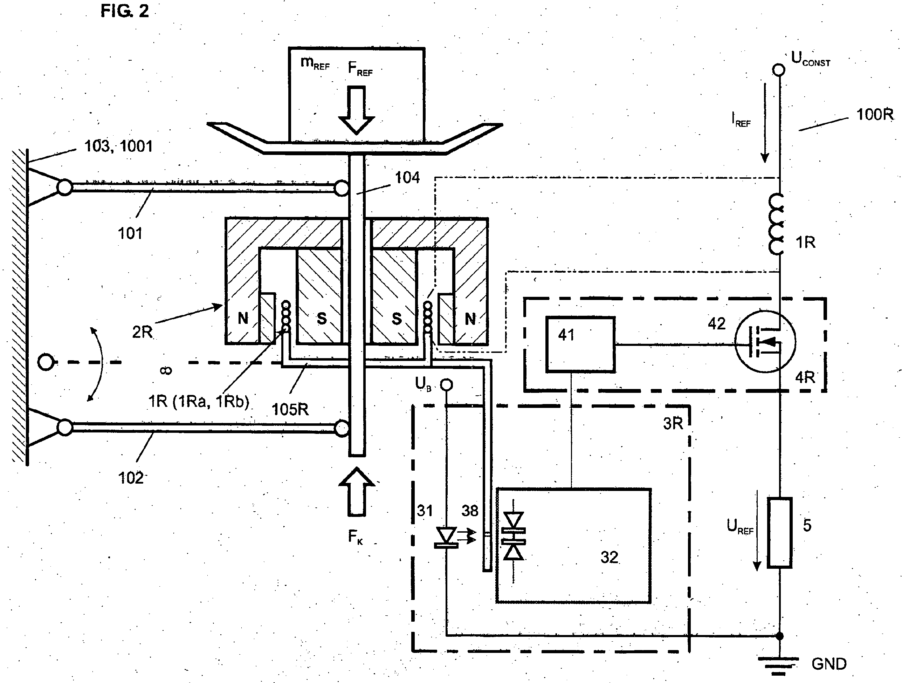

Figur 2 in schematischer Darstellung, eine nach dem Prinzip der elektromagnetischen Kraftkompensation arbeitende Referenzeinheit 100R, mittels der ein Referenzstrom $I_{REF}$ für eine Messeinheit 100, beispielsweise die Schaltungsanordnung von Figur 1 a erzeugt wird;

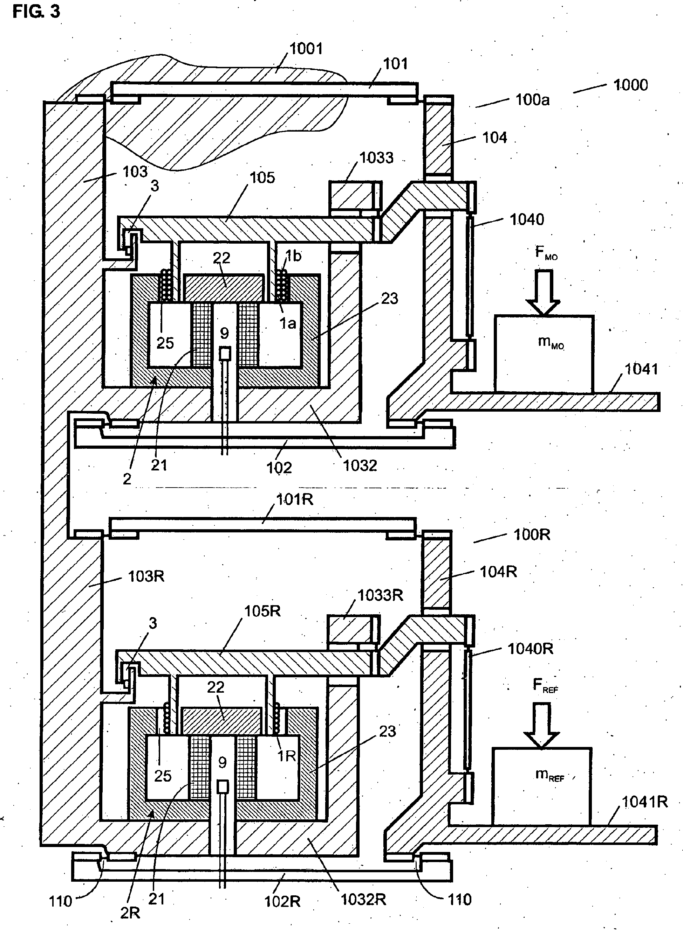

Figur 3 das elektromechanische System einer erfindungsgemässen Kraftmessvorrichtung 1000, die eine nach dem Prinzip der elektromagnetischen Kraftkompensation arbeitende Messeinheit 100 und eine fast identisch ausgestaltete Referenzeinheit 100R aufweist, die wahlweise mit verschiedenen Referenzmassen $m_{REF}$ belastbar ist;

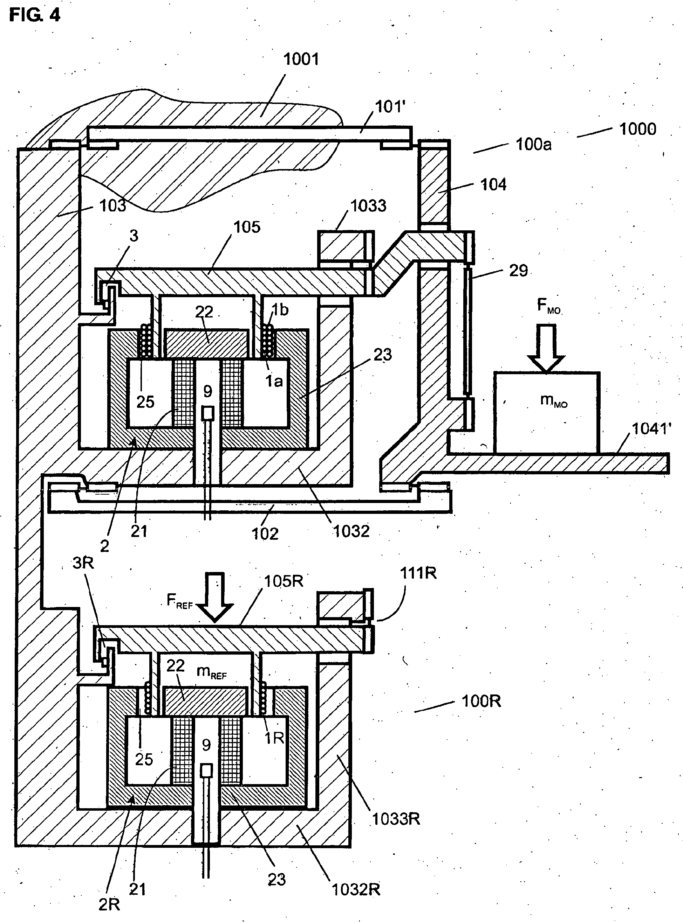

Figur 4 die Kraftmessvorrichtung 1000 von Figur 3 mit einer einfacher ausgestalteten Referenzeinheit 100R, die anstelle eines Hebelwerks lediglich einen Referenzhebel 105R aufweist, der an einem Ende die als Referenzmasse $m_{REF}$ dienende Referenzspule 1R trägt und der am anderen Ende drehbar gelagert und somit Auftriebskräften ausgesetzt ist, die vom Luftdruck abhängig sind;

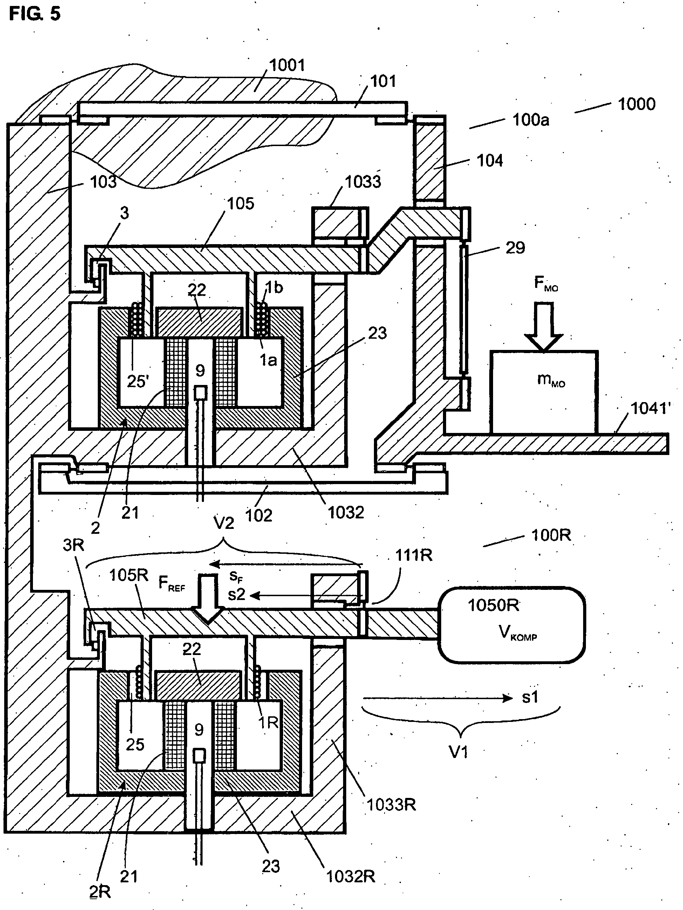

Figur 5 die Kraftmessvorrichtung 1000 von Figur 4 mit einer vorzugsweise ausgestalteten Referenzeinheit 100R, deren Referenzhebel 105R auf der einen Seite des Lagerpunktes 111 R die als Referenzmasse $m_{REF}$ dienende Referenzspule 1R und der anderen Seite des Lagerpunktes 111 R einen Kompensationskörper 1050R, beispielsweise ein Kompensationsgefäss, trägt, mittels dessen die Volumina des Referenzhebels 105R und der damit verbundenen Teile auf beiden Seiten des Lagerpunktes 111 R ausbalanciert werden;

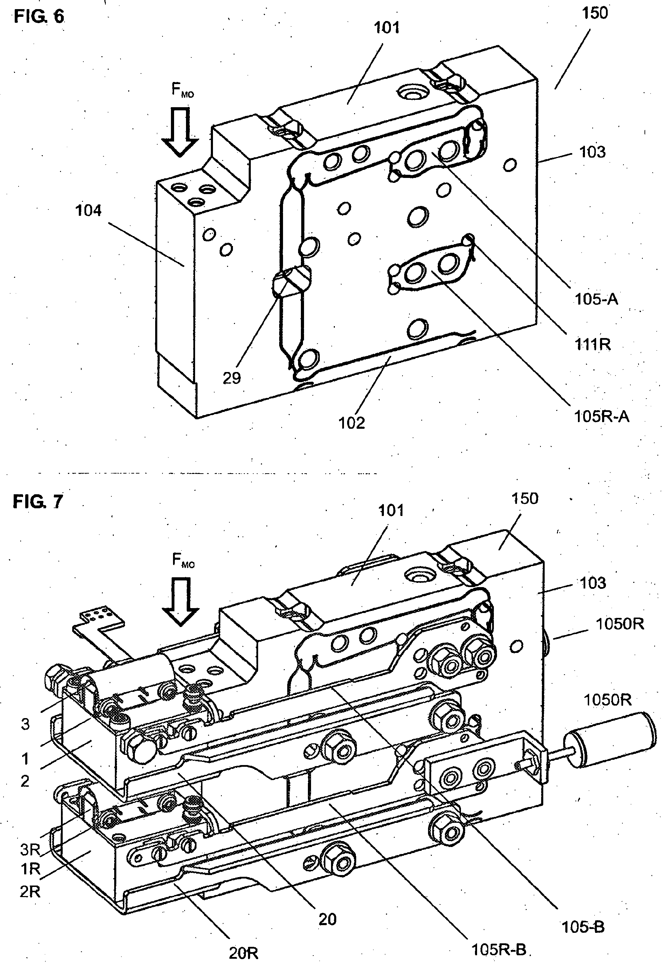

Figur 6 einen mit Hebelwerken für eine Messeinheit 100 und eine Referenzeinheit 100R versehenen monolithisch ausgebildete Kraftübertragungsvorrichtung 150;

Figur 7 die monolithisch ausgebildete Kraftübertragungsvorrichtung 150 von Figur 6 bestückt mit einer Kompensationsspule 1, einer Referenzspule 1 R, Magnetsystemen 2, 2R, und mit optischen Abtasteinheiten 3,3R für die Messeinheit 100 und die Referenzeinheit 100R, für die zudem zwei Kompensationskörper 1050R vorgesehen sind;

Figur 8 eine Kraftmessvorrichtung 1000 mit einer Messeinheit 100 und einer Referenzeinheit 100R, die ein Magnetsystem 2-2R gemeinsam benutzen;

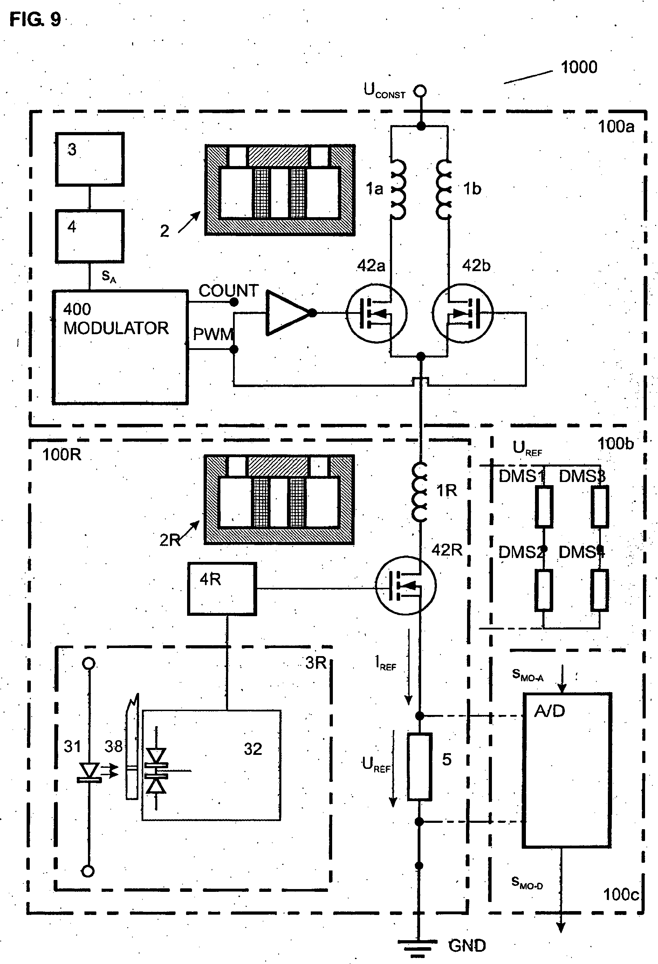

Figur 9 die Referenzeinheit 100R beispielsweise gemäss einer der Figuren 2 bis 8, welche einerseits einen Referenzstrom $I_{REF}$ erzeugt, der in einer nach dem Push/Pull Prinzip arbeitenden ersten Messeinheit 100a als Referenz verwendet wird, und welche andererseits eine Referenzspannung $U_{REF}$ erzeugt, die in einer zweiten Messeinheit 100b als Betriebsspannung für eine Messbrücke und in einer dritten Messeinheit 100c als Referenz für einen AD-Wandler verwendet wird; und

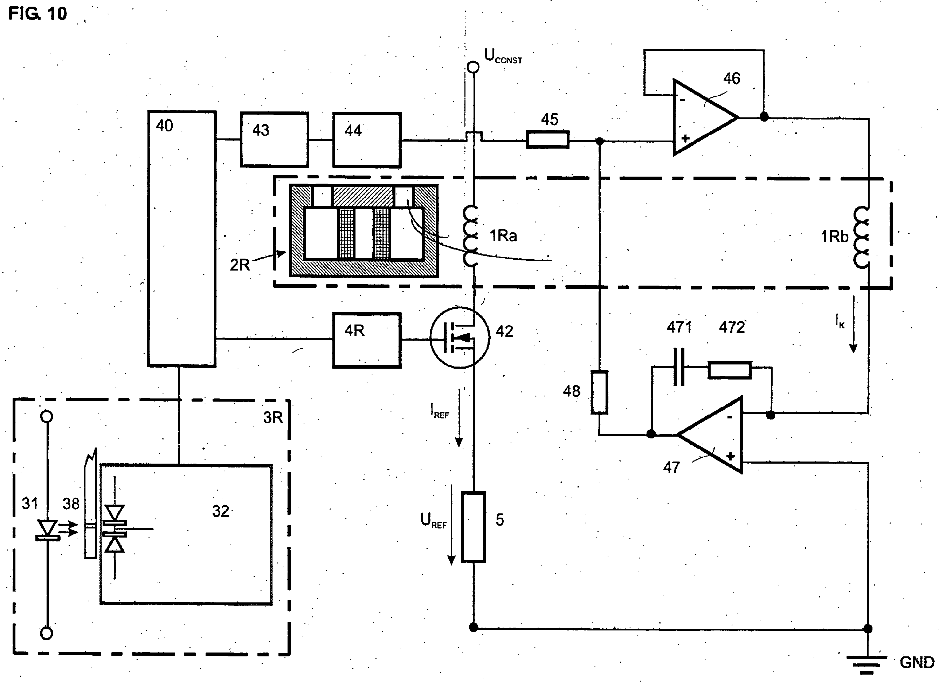

Figur 10 eine Referenzeinheit 100R gemäss einer der Figuren 2 bis 8, die mit einer zweiten Referenzspule 1 Rb und einem zugehörigen Regelsystem ergänzt wurde, mittels dessen höherfrequente Störungen kompensierbar sind, ohne den in der ersten Referenzspule 1Ra geführten Referenzstrom $I_{REF}$ zu beeinträchtigen.

Figur 1 zeigt eine nach dem Prinzip der elektromagnetischen Kraftkompensation arbeitende Waage 1000, die mit einer Kompensationsspule 1 oder mit zwei Kompensationsspulen 1 a, 1 b ausgerüstet sein kann, mittels derer im Push-Pull-Betrieb zeitversetzt einander entgegen gerichtete Magnetfelder erzeugt werden.

Der in Figur 1 schematisch dargestellte mechanische Teil dieser Waage 1 umfasst einen mit dem Waagengehäuse 1001 fest verbundenen, feststehenden Parallelogrammschenkel 103, der mittels zweier Lenker 101 und 102 mit einem auslenkbaren Parallelogrammschenkel 104 verbunden ist, an dem ein der Aufnahme einer Last $F_{MO}$ dienender Ausleger 1041 angeformt ist. Die beiden Parallelogrammschenkel 103 und 104 sind durch Biegelager 110 mit den beiden Lenkern 101 und 102 verbunden. An einem Ausleger 1032 des feststehenden Parallelogrammschenkels 103 ist ein Magnetsystem 2 befestigt, welches einen Permanentmagneten 21 mit einer darauf aufgesetzten Polplatte 22 sowie einen topfförmigen Rückschlusskörper 23 umfasst. Von oben ragt eine Spule 1 gegebenenfalls zwei Spule 1a, 1b in den Luftspalt 25 zwischen dem Rückschlusskörper 23 und der Polplatte 22. Die Spule 1 bzw. die Spulen 1a, 1b sind an einem Kompensationshebel 105 befestigt, welcher über ein Koppelelement 1040 die Normalkomponente der Last $F_{MO}$ überträgt. Der Kompensationshebel 105 ist mittels eines Biegelagers 111 an einer Säule 1033 aufgehängt, welche am Ausleger 1032 des feststehenden Parallelogrammschenkels 103 befestigt ist. Mit Bezugzeichen 3 ist eine optische Abtasteinheit bezeichnet, welche die Abweichungen des Kompensationshebels 105 von der Soll-Lage erfasst.

Ein mit einem Temperaturfühler 9 versehenes Korrekturnetzwerk in der elektrischen Einrichtung beeinflüsst das Mass des lastabhängigen Kompensationsstromes in der Weise, dass die Temperaturabhängigkeit der magnetischen Feldstärke des Magnetsystems weitgehend kompensiert wird.

Eine Waage dieser Art mit nur einer Kompensationsspule 1 ist beispielsweise in [7] beschrieben. Die elektrische Einrichtung der dort beschriebenen Waage weist eine Referenzspannungsquelle mit einer Zener-Diode auf, die für die Bestimmung des Kompensationsstromes massgebend ist, mittels dessen eine Kraft erzeugt wird, welche die Normalkomponente der Last $F_{MO}$ kompensiert.

Bekannt sind ferner nach dem Prinzip der elektromagnetischen Kraftkompensation arbeitende Kraftmessvorrichtungen mit zwei von einem zugehörigen

Kompensationshebel 105 gehaltenen Kompensationsspulen 1a, 1b (siehe Figur 1a), durch die ein Referenzstrom $I_{REF}$ derart alternierend geschaltet wird, dass ein Magnetfeld resultiert, welches mit dem Magnetfeld des Magnetsystems 2 derart zusammenwirkt, dass eine Kraft über den Kompensationshebel 105 auf das Koppelelement 1040 einwirkt, welche die Normalkomponente der Last $F_{MO}$ kompensiert. Auch bei dieser Ausgestaltung der Kraftmessvorrichtung oder Waage kann der Referenzstrom $I_{REF}$ mittels einer Zener-Diode erzeugt werden.

Die Nachteile der Erzeugung einer Referenzspannung oder eines Referenzstroms mittels einer Zener-Diode oder weiteren Halbleiterbauteilen, sind oben beschrieben.

Erfindungsgemäss werden der Referenzstrom $I_{REF}$ und/oder eine gegebenenfalls daraus abgeleitete Referenzspannung $U_{REF}$ mittels einer Referenzeinheit 100R erzeugt, wie sie in Figur 2 in einer einfachen Ausgestaltung schematisch dargestellt ist. Die Referenzeinheit 100R ist eine mit einer Referenzmasse $m_{REF}$ belastete Kraftmessvorrichtung, welche den Referenzstrom $I_{REF}$ nach dem Prinzip der elektromagnetischen Kraftkompensation erzeugt. Der Referenzstrom $I_{REF}$ ist mittels einer Abtasteinheit 3R und einer Regelvorrichtung 4R dabei derart regelbar, dass er in einer von einem Referenzhebel 105R gehaltenen ersten Referenzspule 1R ein Magnetfeld erzeugt, welches mit dem Magnetfeld eines Referenzmagneten 2R derart zusammenwirkt, dass eine Kompensationskraft $F_K$ auf den Referenzhebel 105R einwirkt, mittels der die ebenfalls auf den Referenzhebel 105R einwirkende Referenzkraft $F_{REF}$ der Referenzmasse $m_{REF}$ kompensiert wird. Die Referenzmasse $m_{REF}$ ist mittels eines Hebelwerks 101, 102, 103, 104 gehalten, von dem der feststehende Hebel 103 durch das Gehäuse 1001 der Kraftmessvorrichtung bzw. der Waage oder der alleinstehenden Referenzeinheit 100R gebildet ist. Schematisch ist gezeigt, dass der Referenzhebel 105R virtuell in einer unendlich weiten Distanz drehbar gelagert ist, weshalb Verschiebungen der Referenzmasse in der Waagschale ohne Bedeutung sind.

Ferner ist gezeigt, dass die Kompensationskraft $F_K$ axial in Gegenrichtung zur Referenzkraft $F_{REF}$ verläuft und diese vollständig kompensiert.

Abweichungen des Referenzhebels 105R von der Solllage, die typischerweise im Bereich von 1-2 Nanometer liegen, werden mittels der optischen Abtasteinheit 3R erfasst. Die optische Abtasteinheit 3R weist dazu eine Lichtquelle 31 und eine mit Lichtsensoren versehene Sensoreinheit 32 auf, zwischen denen eine mit dem Referenzhebel 105R verbundene Fahne 38 vorgesehen ist, die eine Lichtöffnung aufweist, durch die das von der Lichtquelle 31 abgegebene Licht zur Sensoreinheit 32 gelangt. Die Sensoreinheit 32, welche wie angedeutet zwei Lichtsensoren aufweisen kann, gibt eine Regelgrösse an die Regelvorrichtung 4 ab. Die Sensoreinheit 32 kann aber an Stelle zweier Lichtsensoren auch andere Sensoreinheiten aufweisen, beispielsweise Photodiodenarrays, PSD (Position Sensitive Device) eine Kamera mit Bildverarbeitung und dergleichen. Die Regelvorrichtung 4 weist einen Reglerbaustein 41, beispielsweise mit einer PID-Charakteristik, und einen regelbaren Widerstand 42 auf, durch der der Referenzstrom $I_{REF}$ derart eingestellt wird, dass der Referenzhebel 105R immer in der Soll-Lage gehalten wird, in der die Referenzkraft $F_{REF}$ durch die Kompensationskraft $F_K$ vollständig kompensiert wird. Der Referenzstrom $I_{REF}$ wird dabei über einen Referenzwiderstand 5, an dem die Referenzspannung $U_{REF}$ auftritt, gegen Masse GND geführt.

Figur 3 zeigt eine nach dem oben beschriebenen Prinzip der elektromagnetischen Kraftkompensation arbeitende Messeinheit 100a und eine fast identisch ausgestaltete Referenzeinheit 100R. Der elektrische und elektronische Teil der Messeinheit 100a und der Referenzeinheit 100R entspricht beispielsweise der Ausgestaltung von Figur 9. Beide Einheiten 100, 100R sind mit einem Parallelogramm versehen, das aus den Elementen 101, 102, 103, 104 bzw. 101R, 102R, 103R, 104R besteht, welches erlaubt, nur die Normalkomponente der Last $m_{MO}$ bzw. $m_{REF}$ an das Koppelelement 1040 bzw. 1040R zu übertragen. Eine Änderung der Position der Last $m_{MO}$ bzw. $m_{REF}$ auf dem betreffenden Ausleger 1041, 1041R hat daher keinen Einfluss auf die Messung. Diese relativ aufwendige Ausgestaltung der Referenzeinheit 100R wird dann vorgesehen, wenn die Referenzmasse $m_{REF}$ wahlweise austauschbar sein soll.

In Figur 4 ist die Kraftmessvorrichtung 1000 von Figur 3 mit einer einfacher ausgestalteten Referenzeinheit 100R gezeigt, die anstelle eines Hebelwerks lediglich einen Referenzhebel 105R aufweist, der an einem Ende die als Referenzmasse $m_{REF}$ dienende Referenzspule 1R trägt und der am anderen Ende von einem Lägerelement 111R gehalten ist. Da die Referenzmasse $m_{REF}$ bei dieser Ausgestaltung nicht austauschbar sein soll, kann diese beliebig gewählt und angeordnet werden. Wie in Figur 4 gezeigt, wird daher die Referenzspule 1R selbst als Referenzmasse $m_{REF}$ verwendet, wodurch eine ausserordentlich einfache Ausgestaltung der Referenzeinheit 100R resultiert. Zu beachten ist bei dieser Ausgestaltung jedoch, das durch das Volumen des Referenzhebels 105R und der Referenzspule 1R Luft verdrängt wird, so dass Auftriebskräfte resultieren, die vom Luftdruck abhängig sind. Sofern der Luftdruck ändert, ändert somit auf die Kraft $F_{REF}$, mit der der Referenzhebel 105R nach unten gedrückt wird und gleichzeitig auch der Referenzstrom, $I_{REF}$, mittels dessen ein Magnetfeld erzeugt wird, welches mit dem Magnetfeld des Referenzmagneten 2R derart zusammenwirkt. Die Kraftmessvorrichtung 1000 von Figur 4 liefert daher optimale Ergebnisse bei konstantem Luftdruck.

Über längere Perioden treten jedoch Druckschwankungen auf, die bei konstanter Höhe typischerweise 40 hPa und somit etwa 4% des Gesamtdruck betragen. In der in Figur 5 gezeigten Ausgestaltung der Referenzeinheit 100R wird der Referenzhebel 105R daher derart mit einem Kompensationskörper 1050R versehen, dass sich die beidseits des Lagerelements 111R resultierenden Volumenanteile des Referenzhebels 105R und somit die entsprechenden Auftriebskräfte wie folgt kompensieren:

$$V1 *s1 = V2 * s2$$

V1 beinhaltet das gesamte Volumen der Referenzspule 1 R und des Referenzhebels 105R auf der einen Seite des Lagerelements 111R. Die Strecke s1 ist der entsprechende Schwerpunktabstand vom Lagerelement 111R. V2 beinhaltet das Volumen des Referenzhebels 105R auf der andern Seite des Lagerelements 111R sowie das Volumen des Kompensationskörpers 1050R. Die Strecke s2 ist der entsprechende Schwerpunksabstand. Die Strecke $s_F$ ist der Abstand der resultierenden Referenzkraft $F_{REF}$ vom Drehpunkt bzw. vom Lagerelement 111R. Die Volumina V1 und V2 sind dabei die für die Luftverdrängung relevanten Aussenvolumen des Referenzhebels 105R.

Ist die Gleichgewichtsbedingung V1 * s1 = V2 * s2 eingehalten, so wird die Einwirkung des Luftdrucks kompensiert, da für die Berechnung der beidseitig auftretenden Auftriebskräfte auf beiden Seiten der Gleichung die Dichte der Luft $\rho_L$ und die Schwerkraft g eingesetzt wird ($\rho_L$ * V1 * g * s1 = $\rho_L$ * V2 * g * s2). Die Auftriebskräfte bleiben daher ohne Einfluss auf die Referenzkraft $F_{REF}$.

Hinsichtlich der beidseitig des Lagerelements 111 R auftretenden Gewichtsanteilen des Referenzhebels 100R gelten jedoch unterschiedliche Dichten ρ1 und ρ2. Die Dichte ρ2 des Kompensationskörpers 1050R und des entsprechenden Anteils des Referenzhebels 100R muss dabei möglichst klein sein, damit auf der Seite der Referenzspule 1 R im Abstand $S_F$ die notwendige Referenzkraft $F_{REF}$ resultiert:

$$F_{REF} = (\rho1 - \rho2) * V1 * s1 * g / s_F$$

Ferner sollen Rotationsmomente klein sein. Da die Trägheitsmomente bezüglich Rotation quadratisch vom Abstand abhängen, soll die Strecke s2 daher möglichst kurz sein, wodurch sich jedoch das Volumen V2 des Kompensationskörpers 1050R entsprechend vergrössert.

Hinsichtlich der Konstruktion der Messeinheit 100 und der Referenzeinheit 100R resultieren daher zahlreiche Forderungen, die besonders vorteilhaft mit Verwendung einer für beide Einheiten 100, 100R gemeinsam genutzten monolithisch ausgebildeten Kraftübertragungsvorrichtung erfüllt werden können, der aus einem Metallkörper vorzugsweise mittels Funkenerosionstechnik gefertigt wird. Eine derartig ausgestaltete monolithisch ausgebildete Kraftübertragungsvorrichtung 150, mittels der die Messeinheit 100 und der Referenzeinheit 100R kompakt aufgebaut werden können, ist in Figur 6 gezeigt. Die monolithisch ausgebildete Kraftübertragungsvorrichtung 150 umfasst die Elemente 101, 102, 103, 104 eines Parallelogramms, wie es bereits in Figur 2 schematisch gezeigt ist. Ein feststehender Parallelogrammschenkel 103 ist mittels zweier Lenker 101 und 102 mit einem auslenkbaren Parallelogrammschenkel 104 verbunden, auf den die zu messende Kraft $F_{MO}$ des Messobjekts einwirken wird und der über ein Koppelelement 29 mit dem innerhalb der monolithisch ausgebildeten Kraftübertragungsvorrichtung 150 vorgesehenen Teil 105-A des Kompensationshebels 105 verbunden ist. Ein Teil 105R-A des Referenzhebels 105R mit dem zugehörigen Lagerelement 111 R ist in den feststehenden Parallelogrammschenkel 103 eingearbeitet.

Figur 7 zeigt die monolithisch ausgebildete Kraftübertragungsvorrichtung 150 von Figur 6 bestückt mit einer Kompensationsspule 1, einer Referenzspule 1 R, Magnetsystemen 2 und 2R, optischen Abtasteinheiten 3, 3R für die Messeinheit 100 und die Referenzeinheit 100R. Die in die monolithisch ausgebildete Kraftübertragungsvorrichtung 150 integrierten ersten Teile 105-A und 105R-A des Kompensationshebels 105 und des Referenzhebels 105R sind beidseits der monolithisch ausgebildeten Kraftübertragungsvorrichtung 150 je mit zweiten Teilen 105-B und 105R-B des Kompensationshebels 105 und des Referenzhebels 105R verschraubt, welche die Kompensationsspule 1 bzw. die Referenzspule 1 R über dem zugehörigen Magnetsystem 2, 2R halten, das von einem mit der monolithisch ausgebildeten Kraftübertragungsvorrichtung 150 verschraubten Stützhebel 20 bzw. 20R gehalten ist. Gezeigt sind ferner die Abtasteinheiten 3, 3R, mittels derer die Auslenkung der Hebel 105, 105R erfasst wird. Weiter gezeigt sind zwei Kompensationskörper 1050R, die beidseits der monolithisch ausgebildeten Kraftübertragungsvorrichtung 150 mit einem Teil des Referenzhebels 105R verbunden sind.

Möglich sind zahlreiche weitere Ausgestaltungen der monolithisch ausgebildeten Kraftübertragungsvorrichtung 150. Beispielsweise könnten die Magnetsysteme 2, 2R auf einander gegenüberliegenden Seiten vorgesehen sein. Die vorliegende Ausgestaltung hat jedoch den Vorteil, dass einwirkende mechanische Störungen von der Messeinheit 100 und der Referenzeinheit 100R in gleicher Weise erfasst und dadurch kompensiert werden. Selbstverständlich können auch monolithisch ausgebildete Kraftübertragungsvorrichtungen 150 verwendet werden, die Übersetzungen mit mehreren Hebeln aufweisen. (Die dargestellte Wägezelle hat 2 hebel, es können aber auch nur ein Hebel odere mehrere Hebel verwendet werden)

Besonders einfach können unter Verwendung einer monolithisch ausgebildeten Kraftübertragungsvorrichtung auch eine oder mehrere Referenzeinheiten 103 realisiert werden, die gegebenenfalls mehrere Referenzsignale für eine Kraftmessvorrichtung 1000 oder weitere Messgeräte erzeugen.

Figur 8 zeigt eine Kraftmessvorrichtung 1000 mit einer Messeinheit 100 und einer Referenzeinheit 100R, die ein Magnetsystem 2-2R gemeinsam nutzen. Auf diese Weise kann die Vorrichtung, beispielsweise die in Figur 6 gezeigte monolithisch ausgebildete Kraftübertragungsvorrichtung 150, noch einfacher und kompakter aufgebaut werden. Das Magnetsystem 2-2R weist auf beiden Seiten je einen ringförmigen Luftspalt auf, in den die Kompensationsspule 1 bzw. die Referenzspule 1 R eintauchen kann. Der Träger 1033 des Magnetsystems 2-2R ist dazu mit einer Öffnung 120 versehen, durch die die Referenzspule 1 R hindurch geführt werden kann. Nebst dem reduzierten Aufwand ist bei dieser Ausgestaltung der Erfindung besonders vorteilhaft, dass nur für ein Magnetsystem 2-2R eine Temperaturkompensation erforderlich ist. Ferner wirken sich Änderungen des magnetischen Flusses auf die Messeinheit 100 und die Referenzeinheit 100R gleichartig aus, so dass sich allfällige Änderungen sogar kompensieren.

Figur 9 zeigt die Referenzeinheit 100R, beispielsweise gemäss Figur 2,

   a) mit einer ersten Messeinheit 100a, welcher der Referenzstrom $I_{REF}$ zugeführt wird,

   b) mit einer zweiten Messeinheit 10Öb, in der eine Referenzspannung $U_{REF}$ an eine DMS-Messbrücke angelegt wird und

   c) mit einer dritten Messeinheit 100c, in der die Referenzspannung $U_{REF}$ einem AD-Wandler zugeführt wird.

Die nach dem Püsh/Pull Prinzip arbeitende erste Messeinheit 100a weist einen Modulator 400 auf, der ein digitales Signal abgibt, das pulsweitenmoduliert oder nach dem Sigma-Delta (⊓⊔) Verfahren moduliert ist. Die beiden genannten Verfahren (PWM und ⊓⊔) sind beispielsweise in [8], R. Esslinger, G. Gruhler, R.W. Stewart, Digital Power Amplification based on Pulse-Width Modulation and Sigma-Delta Loops, Signal Processing Division, Dept of Electronic and Electrical Engineering, University of Strathclyde, Glasgow G1 1XW, Scotland beschrieben.

Nach dem PWM-Verfahren wird ein von der Regeleinheit 4 abgegebenes analoges Regelsignal $s_A$ in Paare von zueinander komplementären Pulsen gewandelt, deren Breiten entsprechend der zu kompensierenden Last geregelt werden und in der Summe gleich "1" sind. Mittels der generierten Pulse werden die Schalter 42a und 42b betätigt. Sofern die Breite des ersten Pulses gleich "1" ist, ist die Waage nicht belastet. Sofern die Breiten beider Pulse gleich sind, liegt Halblast vor und sofern die Breite des zweiten Pulses gleich "1" ist, liegt Volllast vor. Durch Abzählen der Breite eines der Pulse kann daher die Höhe der Last bestimmt werden.

Nach dem ⊓⊔-Verfahren wird ein von der Regeleinheit 4 abgegebenes analoges Regelsignal $s_A$ in eine Sequenz von Pulsen vom Wert "0" und "1" wählbarer Anzahl gewandelt, deren Mittelwert dem Wert des analogen Regelsignals $s_A$ entspricht. Das Verhältnis der Nullen und Einsen entspricht daher der Höhe der Last $F_{MO}$.

In der in Figur 10 gezeigten vorzugsweisen Ausgestaltung der Referenzeinheit 100R werden Signalanteile der Regelgrösse, deren Frequenz oberhalb eines Wertes aus dem Bereich von vorzugsweise 10 Hz - 50 Hz liegt, über ein Hochpassfilter 43 einer Regeleinheit 44 zugeführt, deren Ausgangssignal über einen Widerstand 45 dem nicht-invertierenden Eingang eines als Impedanzwandler beschalteten Operationsverstärkers 46 zugeführt wird. Vom Operationsverstärker 46 wird ein entsprechender Kompensationsstrom $I_K$ an eine mit dem Kompensationshebel 105R verbundene zweite Referenzspule 1 Rb abgegeben, mittels dessen ein Magnetfeld wird, das mit dem Magnetfeld des Referenzmagneten 2R derart zusammenwirkt, dass höherfrequente Störeinwirkungen korrigiert werden. Störeinwirkungen sind mittels der zweiten Referenzspule 1 Rb daher rasch korrigierbar, ohne dass der Referenzstrom $I_{REF}$ in der ersten Referenzspule 1 Ra beeinträchtigt wird. Der Referenzstrom $I_{REF}$ oder die gegebenenfalls daraus abgeleitete Referenzspannung $U_{REF}$ bleibt daher weitgehend frei von Störungen.

Um allfällige Drifts oder Abweichungen des Referenzstroms $I_{REF}$ in der ersten Referenzspule 1Ra zu verhindern, wird der durch die zweite Referenzspule 1Rb geführte Kompensationsstrom $I_K$ dem invertierenden Eingang eines Integrators 47 zugeführt, dessen Ausgang über einen Widerstand 48 auf den nicht-invertierenden Eingang des Operationsverstärkers 46 zurückgeführt ist, wobei eine Regelschleife gebildet wird, die das Ausgangssignal des Integrators 47 stets in die Ausgangslage zurückführt. Der Integrator ist als Operationsverstärker 47 ausgestaltet, dessen Ausgang über einen Widerstand 471 und einen Kondensator 472 mit dessen invertierenden Eingang verbunden ist.

Ein in der zweiten Referenzspule 1 Rb resultierender Gleichstromanteil wird daher integriert und phasenrichtig an den nicht-invertierenden Eingang des Operationsverstärkers 47 zurückgeführt, wodurch ein dort anliegender konstanter Offset kompensiert wird. Durch diese Massnahme wird sichergestellt, dass in der zweiten Referenzspule R1b nur Ströme fliessen, die von den einwirkenden, hochfrequenten Störungen abhängen und nicht der Kraftkompensation dienen.

Die erfindungsgemässe Kraftmessvorrichtung 1, die vorzugsweise als Waage verwendet wird, wurde in bevorzugten Ausgestaltungen beschrieben und dargestellt. Erfindungsgemässe Referenzeinheiten sind jedoch in Verbindung mit beliebigen weiteren gravimetrischen oder auch anderen Messgeräten vorteilhaft einsetzbar.

Die elektro-mechanische Ausgestaltung sowie die Ausgestaltung der Elektronik der Referenzeinheit 100R und der Messeinheit 100 der Kraftmessvorrichtung 1000 wurden zum Teil vereinfacht oder in beispielhaften Ausgestaltungen dargestellt. Die erfindungsgemässe Lösung ist jedoch bei beliebiger Ausgestaltung der Referenzeinheit 100R und der Messeinheit 100, insbesondere beliebig ausgestalteter Hebelwerke, Messvorrichtungen, Magnetsysteme, Spulensysteme und Regeleinrichtungen einsetzbar.

Literaturverzeichnis

[1]   Bauen Sie Ihre Qualität auf solidem Grund!, Firmenbrochüre, Mettler Toledo GmbH, Januar 2001

[2]   Wägefibel, Mettler Toledo GmbH, April 2001

[3]   US 5,665,941

[4]   US 2004/0088342 A1

[5]   U. Tietze, Ch. Schenk, Halbleiterschaltungstechnik, 11. Auflage, 1. Nachdruck, Springer Verlag, Berlin 1999

[6]   Albert O'Grady, Transducer/Sensor Excitation and Measurement Techni`ues, Analog Dialogue 34-5 (2000)

[7]   DE 33 24 402

[8]   R. Esslinger, G. Gruhler, R.W. Stewart, Digital Power Amplification based on Pulse-Width Modulation and Sigma-Delta Loops, Signal Processing Division, Dept. of Electronic and Electrical Engineering, University of Strathclyde, Glasgow G1 1XW, Scotland

**Patentansprüche**

1. Kraftmessvorrichtung (1000) mit einer Messeinheit (100) und mit einer Referenzeinheit (100R), die der Abgabe eines Referenzstromes ($I_{REF}$) dient, mittels dem die zu bestimmende Kraft ($F_{MO}$) eines Messobjekts von der Messeinheit (100) erfassbar ist, wobei die Referenzeinheit (100R) eine mit einer Referenzmasse ($m_{REF}$) belastete Kraftmessvorrichtung ist, die nach dem Prinzip der elektromagnetischen Kraftkompensation den Referenzstrom ($I_{REF}$) erzeugt, der mittels einer Mess- und Regelvorrichtung (3R, 4R) derart regelbar ist, dass er in einer von einem Referenzhebel (105R) gehaltenen ersten Referenzspule (1 R; 1 Ra) ein Magnetfeld erzeugt, welches mit dem Magnetfeld eines Referenzmagneten (2R; 2-2R) derart zusammenwirkt, dass eine Kraft auf den Referenzhebel (105R) einwirkt, mittels der die ebenfalls auf den Referenzhebel (105R) einwirkende Kraft ($F_{REF}$) der Referenzmasse ($m_{REF}$) kompensierbar ist, **dadurch gekennzeichnet, dass** die von der Referenzeinheit (100R) erzeugte Referenzspannung ($U_{REF}$) in der nach dem DMS-Prinzip arbeitenden Messeinheit (100) an eine Messbrücke angelegt wird, oder dass der von der Referenzeinheit (100R) erzeugte Referenzstrom ($I_{REF}$) in der nach dem Prinzip der elektromagnetischen Kraftkompensation arbeitenden Messeinheit (100) derart alternierend durch eine von einem zugehörigen Kompensationshebel (105) gehaltene zugehörige erste und zweite Kompensationsspule (1 a, 1 b) geschaltet wird, dass ein Magnetfeld resultiert, welches mit dem Magnetfeld eines zugehörigen Magnetsystems (2) derart zusammenwirkt, dass eine Kraft über den zugehörigen Kompensationshebel (105) auf ein zugehöriges Hebelwerk (101, 102, 103, 104) einwirkt, mittels der die ebenfalls auf das Hebelwerk (101, 102, 103, 104) einwirkende Kraft ($F_{MO}$) des Messobjekts ($m_{MO}$) von der Messeinheit (100) kompensierbar ist, oder dass der erforderliche Kompensationsstrom aus der Referenzspannung ($U_{REF}$) oder dem Referenzstrom ($I_{REF}$) abgeleitet ist, oder dass in der Messeinheit (100) ein AD-Wandler vorgesehen ist, welcher die Referenzspannung ($U_{REF}$) oder der Referenzstrom ($I_{REF}$) als Referenzgrösse zuführbar ist, mittels der die gemessenen Signale ($s_{MO}$) des Messobjekts ($m_{MO}$) digitalisierbar sind.

2. Kraftmessvorrichtung (1000) nach Anspruch 1, **dadurch gekennzeichnet, dass** der Referenzstrom ($I_{REF}$) durch einen Referenzwiderstand (5) geführt wird, um daran eine Referenzspannung ($U_{REF}$) zu erzeugen und/oder dass der Referenzstrom ($I_{REF}$) oder die Referenzspannung ($U_{REF}$) gewandelt und als digitale Referenzgrösse verwendet wird.

3. Kraftmessvorrichtung (1000) nach Anspruch 1 oder 2, **dadurch gekennzeichnet, dass** die Ist-Position des Referenzhebels (105R), mittels einer optischen Abtasteinheit (3R) messbar ist, die der Abgabe einer entsprechenden Regelgrösse dient, anhand der der Referenzstrom ($I_{REF}$) durch die Regelvorrichtung (4R) derart einstellbar ist, dass der Referenzhebel (105R) stets gegen eine Soll-Position geführt wird.

4. Kraftmessvorrichtung (1000) nach Anspruch 1, 2 oder 3, **dadurch gekennzeichnet, dass** Signalanteile der Regelgrösse, deren Frequenz oberhalb eines Wertes aus dem Bereich von 10 Hz - 50 Hz liegt, über ein Hochpassfilter (43) einer Regeleinheit (44) zuführbar sind, mittels der ein Verstärker (46) steuerbar ist, der einen entsprechenden Kompensationsstrom ($I_K$) an eine mit dem Referenzhebel (105R) verbundene zweite Referenzspule (R1b) abgibt, welcher ein Magnetfeld erzeugt, das mit dem Magnetfeld des Referenzmagneten (2R) derart zusammenwirkt, dass höherfrequente Störeinwirkungen korrigierbar sind.

5. Kraftmessvorrichtung (1000) nach Anspruch 4, **dadurch gekennzeichnet, dass** der Kompensationsstrom ($I_K$) über die zweite Referenzspule (R1 b) einem Eingang eines Integrators (47) zuführbar ist, dessen Ausgang auf den Eingang des Verstärkers (46) zurückgeführt ist, wobei eine Regelschleife gebildet wird, die das Ausgangssignal des Integrators (47) stets in die Ausgangslage zurückführt.

6. Kraftmessvorrichtung (1000) nach einem der Ansprüche 1-5, **dadurch gekennzeichnet, dass** der Referenzhebel (105R) mittels eines Lagerelements (111 R) mit dem feststehenden Teil (103) des Hebelwerks der Messeinheit (100) verbunden ist und/oder dass der Referenzhebel (105R) und das Hebelwerk (101, 102, 103, 104, 104) der Messeinheit (100) zumindest teilweise in einer monolithisch ausgebildeten Kraftübertragungsvorrichtung (150) integriert sind und/oder dass nur die Referenzeinheit (100R) mittels einer monolithisch ausgebildeten Kraftübertragungsvorrichtung realisiert ist.

7. Kraftmessvorrichtung (1000) nach einem der Ansprüche 1-6, **dadurch gekennzeichnet, dass** für die Messeinheit (100) und die Referenzeinheit (100R) ein gemeinsam genutztes Magnetsystem (2-2R) vorgesehen ist, dessen Magnetfeld auf einer Seite mit dem in der Kompensationsspule (1) und auf der anderen Seite mit dem Magnetfeld der Referenzspule (1 R) zusammenwirkt.

8. Kraftmessvorrichtung (1000) nach einem der Ansprüche 1-7, **dadurch gekennzeichnet, dass** die Referenzspule (1 R) und gegebenenfalls Teile des Referenzhebels (105R) die Referenzmasse ($m_{REF}$) bilden.

9. Kraftmessvorrichtung (1000) nach einem der Ansprüche 1-7, **dadurch gekennzeichnet, dass** das Volumen (V1) der Referenzspule (1R) und des Anteils des Referenzhebels (105R) auf einer Seite des Lagerelements (111) durch das Volumen (V2) wenigstens eines Kompensationskörpers (1050R) und des Anteils des Referenzhebels (105R) auf der anderen Seite des Lagerelements (111) unter Berücksichtigung des Schwerpunktabstände (s1, s2) kompensiert ist, so dass die beidseits auftretenden Auftriebskräfte auch bei Änderungen des Luftdrucks zumindest annähernd ausbalanciert sind.

10. Kraftmessvorrichtung (1000) nach Anspruch 9, **dadurch gekennzeichnet, dass** wenigstens ein Kompensationskörper (1050R) austauschbar und/oder der Abstand vom Kompensationskörper (1050R) zum Lagerelement (111) einstellbar ist.

11. Kraftmessvorrichtung (1000) nach einem der Ansprüche 1-10, **dadurch gekennzeichnet, dass** die Referenzeinheit (100R) in einem gasdicht verschlossenen Gehäuse angeordnet ist.

12. Kraftmessvorrichtung (1000) nach Anspruch 9, **dadurch gekennzeichnet, dass** das gasdicht verschlossene Gehäuse evakuiert ist.

13. Kraftmessvorrichtung (1000) nach einem der Ansprüche 1-12, **dadurch gekennzeichnet, dass** die Temperatur der Magnetsysteme (2, 2R) und/oder der Spulen (1; 1a, 1b; 1R; 1Ra, 1Rb) der Messeinheit (100) und/oder der Referenzeinheit (100R) messbar und zur Korrektur der Messwerte verwendbar ist.

14. Kraftmessvorrichtung (1000) nach einem der Ansprüche 1-13, **dadurch gekennzeichnet, dass** die Referenzeinheit (100R) mindestens einen Speicher für spezifische Daten der Referenzeinheit und/oder einen Identifikationscode aufweist.

15. Kraftmessvorrichtung (1000) nach einem der Ansprüche 1-14, **dadurch gekennzeichnet, dass** die Referenzeinheit (100R) eine elektrische und mechanische Schnittstelle aufweist.

16. Kraftmessvorrichtung (1000) nach einem der Ansprüche 1-15, **dadurch gekennzeichnet, dass** die Referenzeinheit (100R) als Mikroelektromechanisches System aufgebaut ist.

**Claims**

1. Force-measuring device (1000) with a measuring unit (100), and further with a reference unit (100R) serving to deliver a reference voltage ($U_{REF}$), by means of which the force ($F_{MO}$) of a measurement object which is to be determined can be measured by the measuring unit (100), wherein the reference unit (100R) is a force-measuring device which is loaded with a reference mass ($m_{REF}$) and which in accordance with the principle of electromagnetic force compensation generates the reference current ($I_{REF}$) that can be controlled by means of a measuring- and regulating device (3R, 4R), so that in a first reference coil (1 R, 1 Ra) which is held by a reference lever (105R) the reference current ($I_{REF}$) generates a magnetic field which interacts with the magnetic field of a reference magnet (2R; 2-2R) in such a way that a magnetic force is brought to bear on the reference lever (105R), wherein the force ($F_{REF}$) of the reference mass ($m_{REF}$) which is likewise acting on the reference lever can be compensated by said magnetic force, **characterized in that**
in the measuring unit (100) which operates according to the strain gauge principle, the reference voltage ($U_{REF}$) generated by the reference unit (100R) is applied to a measuring bridge circuit, or that
in the measuring unit (100) which operates according to the principle of magnetic force compensation, the reference current ($I_{REF}$) generated by the reference unit (100R) is switched to flow alternatingly through a first and a second compensation coil (1 a, 1 b) held by a compensation lever (105), so that the result is a magnetic field which cooperates with the magnetic field of an associated magnet system (2) in such a way that a force acts on an associated lever mechanism (101, 102, 103, 104) through the compensation lever (105), whereby the force ($F_{MO}$) of the measurement object which is likewise acting on the lever mechanism (101, 102, 103, 104) can be compensated by the measuring unit (100), or that the required compensation current is derived from the reference voltage ($U_{REF}$) or from the reference current ($I_{REF}$), or that
the measuring unit (100) comprises an A/D converter capable of receiving and using the reference voltage ($U_{REF}$) or the reference current ($I_{REF}$) as reference quantity by means of which the measured signals ($s_{MO}$) of the measurement object ($m_{MO}$) can be digitized.

2. Force-measuring device (1000) according to claim 1, **characterized in that** the reference current ($I_{REF}$) is routed through a reference resistor (5) in order to generate a reference voltage ($U_{REF}$) across said reference resistor (5) and/or that the reference current ($I_{REF}$) or the reference voltage ($U_{REF}$) is converted and used as a digital reference quantity.

3. Force-measuring device (1000) according to claim 1 or 2, **characterized in that** the actual momentary position of the reference lever (105R) can be measured by means of an optical position sensor unit (3R) which serves to deliver a corresponding feedback quantity based on which the reference current ($I_{REF}$) flowing through the regulating device (4R) can be controlled in such a way that the reference lever (105R) is always returned to a target position.

4. Force-measuring device (1000) according to claim 1, 2 or 3, **characterized in that** signal components of the feedback quantity whose frequency exceeds a given value in the range from 10 Hz to 50 Hz, can be sent by way of a high-pass filter (43) to a regulating unit (44) by means of which an amplifier (46) can be controlled to send a corresponding compensation current ($I_K$) to a second reference coil (R1 b) which is connected to the reference lever, wherein the compensation current ($I_K$) generates a magnetic field which cooperates with the magnetic field of the reference magnet (2R) in such a way that the effects of disturbances in the higher frequency ranges can be corrected.

5. Force-measuring device (1000) according to claim 4, **characterized in that** the compensation current ($I_K$) can be directed by way of the second reference coil (R1 b) to an input of an integrator (47) whose output is returned to the input of the amplifier (46), whereby a feedback loop is established which always returns the output signal of the integrator (47) to the starting position.

6. Force-measuring device (1000) according to one of the claims 1 to 5, **characterized in that** the reference lever (105R) is connected by means of a fulcrum element (111 R) to the stationary part (103) of the lever mechanism of the measuring unit (100) and/or that the reference lever (105R) and the lever mechanism (101, 102, 103, 104) of the measuring unit are incorporated at least in part in a monolithically configured force-transmitting mechanism (150), and/or that only the reference unit (100R) is realized by means of a monolithically configured force-transmitting device.

7. Force-measuring device (1000) according to one of the claims 1 to 6, **characterized in that** a magnet system (2-2R) is provided for the shared use of the measuring unit (100) and the reference unit (100R), wherein the magnetic field on one side of said magnet system (2-2R) cooperates with the magnetic field of the compensation coil (1) and on the other side of the magnet system (2-2R) with the magnetic field of the reference coil (1 R).

8. Force-measuring device (1000) according to one of the claims 1 to 7, **characterized in that** the reference coil (1 R) and, where appropriate parts of the reference lever (105R), form the reference mass ($m_{REF}$).

9. Force-measuring device (1000) according to one of the claims 1 to 7, **characterized in that** the volume (V1) of the reference coil (1 R) and of the part of the reference lever (105R) that lies on one side of the fulcrum element (111) is compensated in such a way by the volume (V2) of at least one compensating displacement body (1050R) and of the part of the reference lever (105R) on the other side of the fulcrum element (111) that when the distances (s1, s2) of the centers of gravity from the fulcrum are taken into account, the buoyancy forces occurring on either side are approximately in balance with each other even with changes in the barometric pressure.

10. Force-measuring device (1000) according to claim 9, **characterized in that** at least one compensating displacement body (1050R) is exchangeable and/or the distance of the displacement body (1050R) from the fulcrum element (111) is adjustable.

11. Force-measuring device (1000) according to one of the claims 1-10, **characterized in that** the reference unit (100R) is arranged in a gastight enclosure.

12. Force-measuring device (1000) according to claim 9, **characterized in that** the gastight enclosure is evacuated.

13. Force-measuring device according to one of the claims 1 to 12, **characterized in that** the temperature of the magnet systems (2, 2R) and/or of the coils (1; 1 a, 1 b; 1 R; 1 Ra, 1 Rb) of the measuring unit (100) and/or of the reference unit (100R) can be measured and used for correcting measurement values.

14. 14.Force-measuring device according to one of the claims 1 to 13, **characterized in that** the reference unit (100R) comprises at least one memory for specific data of the reference unit and/or an identification code.

15. Force-measuring device according to one of the claims 1 to 14, **characterized in that** the reference unit (100R) comprises an electrical and mechanical interface.

16. Force-measuring device according to one of the claims 1 to 15, **characterized in that** the reference unit (100R) is implemented as a micro-electromechanical system.

**Revendications**

1. Dispositif de mesure de force (1000) avec une unité de mesure (100) et avec une unité de référence (100R) destinée à délivrer un courant de référence ($I_{REF}$), au moyen duquel la force à déterminer ($F_{MO}$)

d'un objet à mesurer peut être détectée par l'unité de mesure (100), l'unité de référence (100R) étant un dispositif de mesure de force chargé d'une masse de référence ($m_{REF}$) produisant le courant de référence ($I_{REF}$) selon le principe de compensation de force électromagnétique, celui-ci pouvant être réglé au moyen d'un dispositif de mesure et de réglage (3R, 4R) de façon à produire un champ magnétique dans une première bobine de référence (1 R; 1 Ra) maintenue par un levier de référence (105R), lequel coopère avec le champ magnétique d'un aimant de référence (2R; 2-2R) de telle façon qu'une force agit sur le levier de référence (105R), au moyen de laquelle la force ($F_{REF}$) de la masse de référence ($m_{REF}$) agissant également sur le levier de référence (105R) peut être compensée, **caractérisé en ce que** la tension de référence ($U_{REF}$) fournie par l'unité de référence (100R) de l'unité de mesure (100) fonctionnant d'après le principe DMS , est appliquée à un pont de mesure, ou **en ce que**
le courant de référence ($I_{REF}$) produit par l'unité de référence (100R) est commuté dans l'unité de mesure (100) fonctionnant selon le principe de compensation de force électromagnétique, alternativement par une première et une deuxième bobine de compensation (1a, 1 b) correspondante maintenue par un levier de compensation (105) correspondant, de façon à produire un champ magnétique coopérant de telle façon avec le champ magnétique d'un système d'aimants (2) correspondant, qu'une force agit sur un système de leviers (101, 102, 103, 104) correspondant par le biais du levier de compensation (105) correspondant, au moyen de laquelle la force ($F_{MO}$) de l'objet à mesurer ($m_{MO}$) agissant également sur le système de leviers (101, 102, 103, 104) peut être compensée par l'unité de mesure (100), ou **en ce que**
le courant de compensation nécessaire est dérivé de la tension de référence ($U_{REF}$) ou du courant de référence ($I_{REF}$), ou **en ce que**
il est prévu un convertisseur A/N dans l'unité de mesure (100), la tension de référence ($U_{REF}$) ou le courant de référence ($I_{REF}$) pouvant lui être amené en tant que valeur de référence permettant de numériser les signaux mesurés ($S_{MO}$) de l'objet à mesurer ($m_{MO}$).

2. Dispositif de mesure de force (1000) selon la revendication 1, **caractérisé en ce que** le courant de référence ($I_{REF}$) est guidé à travers une résistance de référence (5) pour y produire une tension de référence ($U_{REF}$), et/ou en ce le courant de référence ($I_{REF}$) ou la tension de référence ($U_{REF}$) est converti(e) et utilisé(e) en tant que valeur de référence numérique.

3. Dispositif de mesure de force (1000) selon la revendication 1 ou 2, **caractérisé en ce que** la position réelle du levier de référence (105R) peut être mesurée à l'aide d'une unité de palpage (3R) destinée à délivrer une valeur de réglage correspondante, à l'aide de laquelle le courant de référence ($I_{REF}$) peut être réglé de telle façon par le dispositif de réglage (4R) que le levier de référence (105R) est toujours guidé contre une position de consigne.

**4.** Dispositif de mesure de force (1000) selon la revendication 1, 2 ou 3, **caractérisé en ce que** des parts de signal de la valeur de référence, dont la fréquence se situe au-dessus d'une valeur de la plage de 10 Hz à 50 Hz, peuvent être fournies, par le biais d'un filtre passe-haut (43), à une unité de réglage (44) permettant de commander un amplificateur (46) délivrant un courant de compensation ($I_K$) correspondant à une deuxième bobine de référence (R1 b) reliée au levier de référence (105R), lequel produit un champ magnétique coopérant avec le champ magnétique de l'aimant de référence (2R) de manière à pouvoir corriger des parasites à plus haute fréquence.

**5.** Dispositif de mesure de force (1000) selon la revendication 4, **caractérisé en ce que** le courant de compensation ($I_K$) peut être fourni, par le biais de la deuxième bobine de référence (R1 b), à une entrée d'un intégrateur (47) dont la sortie est renvoyée vers l'entrée de l'amplificateur (46), formant ainsi une boucle de réglage renvoyant toujours le signal de sortie de l'intégrateur (47) vers la position de départ.

**6.** Dispositif de mesure de force (1000) selon l'une des revendications 1 à 5, **caractérisé en ce que** le levier de référence (105R) est reliée à la partie fixe (103) du système de leviers de l'unité de mesure (100) au moyen d'un élément de palier (111 R), et/ou **en ce que** le levier de référence (105R) et le système de leviers (101, 102, 103, 104) de l'unité de mesure (100) sont au moins partiellement intégrés dans un dispositif de transmission de force (150) conçu de façon monolithique, et/ou **en ce que** seule l'unité de référence (100R) est réalisée au moyen d'un dispositif de transmission de force conçu de façon monolithique.

**7.** Dispositif de mesure de force (1000) selon l'une des revendications 1 à 6, **caractérisé en ce que** pour l'unité de mesure (100) et l'unité de référence (100R), il est prévu un système d'aimants (2-2R) commun, dont le champ magnétique coopère d'un côté avec le champ magnétique de la bobine de compensation (1) et de l'autre côté avec le champ magnétique de la bobine de référence (1 R).

**8.** Dispositif de mesure de force (1000) selon l'une des revendications 1 à 7, **caractérisé en ce que** la bobine de référence (1 R) et éventuellement des parties du levier de référence (105R) forment la masse de référence ($m_{REF}$).

**9.** Dispositif de mesure de force (1000) selon l'une des revendications 1 à 7, **caractérisé en ce que** le volume (V1) de la bobine de référence (1R) et de la part du levier de référence (105R) est compensé d'un côté de l''élément de palier (111) par le volume (V2) d'au moins un corps de compensation (1050R) et de l'autre côté de l'élément de palier (111) par le volume de la part du levier de référence (105R), en tenant compte des écarts entre les centres de gravité (s1, s2), de manière à ce que les forces de sustentation apparaissant des deux côtés puissent également être au moins approximativement équilibrées en cas de variations de la pression atmosphérique.

**10.** Dispositif de mesure de force (1000) selon la revendication 9, **caractérisé en ce qu'au** moins un corps de compensation (1050R) peut être remplacé et/ou **en ce que** l'écart entre le corps de compensation (1050R) et l'élément de palier (111) peut être réglé.

**11.** Dispositif de mesure de force (1000) selon l'une des revendications 1 à 10, **caractérisé en ce que** l'unité de référence (100R) est installée dans un boîtier fermé de manière étanche au gaz.

**12.** Dispositif de mesure de force (1000) selon la revendication 9, **caractérisé en ce que** le boîtier fermé de façon étanche au gaz est évacué.

**13.** Dispositif de mesure de force (1000) selon l'une des revendications 1 à 12, **caractérisé en ce que** la température des systèmes d'aimants (2, 2R) et/ou des bobines (1 ; 1 a, 1 b ; 1R; 1 Ra, 1 Rb) de l'unité de mesure (100) et/ou de l'unité de référence (100R) peut être mesurée et utilisée pour corriger les valeurs de mesure.

**14.** Dispositif de mesure de force (1000) selon l'une des revendications 1 à 13, **caractérisé en ce que** l'unité de référence (100R) présente au moins une mémoire pour des données spécifiques de l'unité de référence et/ou un code d'identification.

**15.** Dispositif de mesure de force (1000) selon l'une des revendications 1 à 14, **caractérisé en ce que** l'unité de référence (100R) présente une interface électrique et mécanique.

**16.** Dispositif de mesure de force (1000) selon l'une des revendications 1 à 15, **caractérisé en ce que** l'unité de référence (100R) est construite comme un système micro-électromécanique.

FIG. 1

FIG. 1a

EP 1 898 193 B1

FIG. 2

**FIG. 3**

**FIG. 4**

**FIG. 5**

**FIG. 6**

F_MO

104
101
150
103
105-A
111R
105R-A
29
102

**FIG. 7**

F_MO

101
150
103
1050R
1050R
3
1
2
3R
1R
2R
20
20R
105R-B
105-B

**FIG. 8**

FIG. 9

EP 1 898 193 B1

**FIG. 10**

## IN DER BESCHREIBUNG AUFGEFÜHRTE DOKUMENTE

### In der Beschreibung aufgeführte Patentdokumente

- US 20040088342 A1
- US 6271484 B1
- DE 3324402
- US 4212361 A
- US 5665941 A

### In der Beschreibung aufgeführte Nicht-Patentliteratur

- Bauen Sie Ihre Qualität auf solidem Grund!. Firmenbrochure. Mettler Toldeo GmbH, Januar 2001, 14-15
- **U. TIETZE ; CH. SCHENK.** Halbleiterschaltungstechnik. Springer Verlag, 1999, 1043-1062
- **ALBERT O'GRADY.** Transducer/Sensor Excitation and Measurement Techniques. *Analog Dialogue,* 2000, 34-5
- A weighing device for use on a ship. **KESSLING G et al.** Measurement science and technology. IOP, 1993, vol. 4, 1035-1042
- **TIETZE, CH. SCHENK.** Halbleiterschaltungstechnik. Springer Verlag, 1999
- **ALBERT O'GRADY.** Transducer/Sensor Excitation and Measurement Techniqües. *Analog Dialogue,* 2000, 34-5
- **R. ESSLINGER ; G. GRUHLER ; R.W. STEWART.** Digital Power Amplification based on Pulse-Width Modulation and Sigma-Delta Loops, Signal Processing Division. *Dept. of Electronic and Electrical Engineering*